# EUROPEAN PATENT SPECIFICATION

(11) **EP 0 509 794 B1**
(45) Date of publication and mention of the grant of the patent: **18.03.1998**
(21) Application number: 92303400.3
(22) Date of filing: 15.04.1992
(51) Int. Cl.: G11B 15/665

(54) **Loading post driving device**
Antriebsvorrichtung für einen Ladestift
Dispositif d'entraînement pour un galet de chargement

(30) Priority: 16.04.1991 JP 83887/91; 17.04.1991 JP 85062/91; 17.04.1991 JP 85064/91; 17.04.1991 JP 85071/91
(43) Date of publication of application: 21.10.1992
(60) Divisional application: 96110666.3
(73) Proprietor: MATSUSHITA ELECTRIC INDUSTRIAL CO., LTD., Kadoma-shi, Osaka-fu, 571 (JP)
(72) Inventor: Konishi, Akio, Hirakata-shi (JP); Saito, Yoshiyuki, Kadoma-shi (JP); Takeda, Shuzo, Hirakata-shi (JP); Yoshio, Hideaki, Moriguchi-shi (JP); Kurumatani, Hiroshi, Osaka-shi (JP)
(74) Representative: Sorrell, Terence Gordon

(56) References cited:
- EP-A- 0 131 413
- EP-A- 0 329 180
- EP-A- 0 478 278

## Description

The invention relates to a loading post driving device for automatically withdrawing a magnetic tape from a tape cassette having a supply reel and a take-up reel provided therein, and winding the tape around a predetermined circumferential portion of a rotary head cylinder.

The present invention is used in a rotary head type magnetic recording/playback apparatus (hereinafter referred to as a VTR) in which a magnetic tape is wound around the cylindrical rotary head cylinder, having a rotary head built therein, to record/playback a signal by the rotary head.

Recently, various kinds of trials have been conducted for reducing the size, weight and height of VTRs In particular, because a mechanism for loading a magnetic tape in a VTR has a very complicated arrangement, requires a larger number of parts and thus affects the overall size of the VTR to a considerable degree, improving the loading mechanism is a quite important objective.

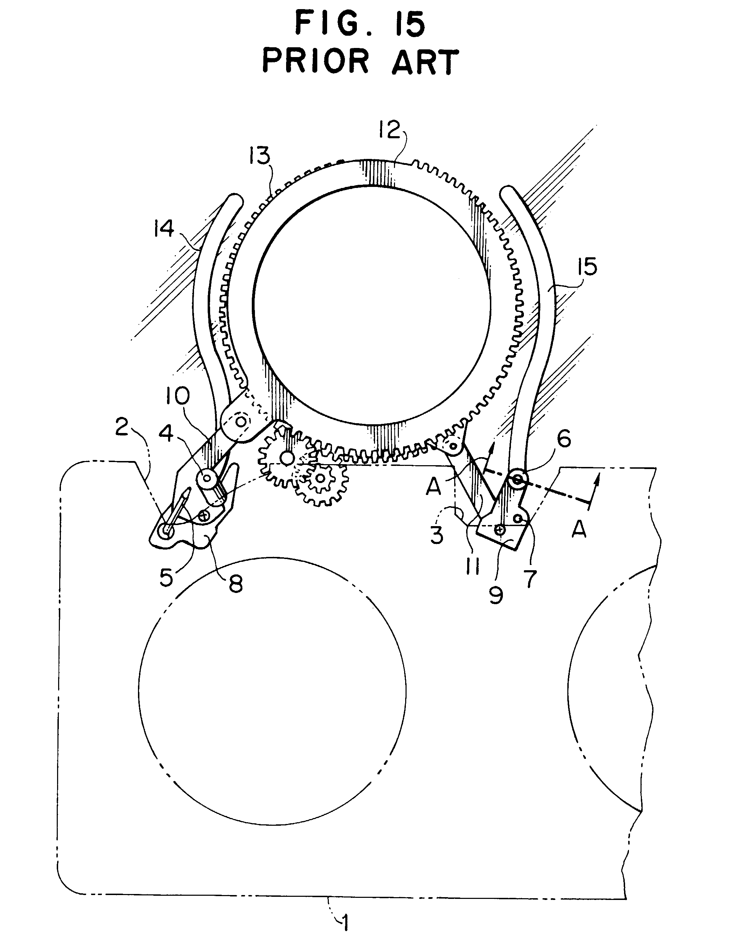

A conventional loading mechanism will be described below with reference to the drawings. Fig. 15 is a top plan view of a prior art loading post driving device. In the drawing, denoted by reference numeral 1 is a tape cassette having in a front surface thereof recessed portions 2 and 3 which are disposed in such a manner that a supply side loading post 4 and an inclined post 5 both mounted on a supply side movable carrier 8 are inserted into the recess 2, and a take-up side loading post 6 and a tape post 7 both mounted on a take-up side movable carrier 9 are inserted into the recess 3, respectively. The supply side movable carrier 8 and the take-up side movable carrier 9 are connected to a ring 12 at the supply side and a ring 13 at the take-up side, respectively, through relay links 10 and 11 so that, as the rings 12 and 13 rotate, the movable carriers 8 and 9 are guided along a take-up side loading guide slot 14 and a take-up side loading guide slot 15, respectively. Thereby, a magnetic tape (not shown) is withdrawn from the tape cassette 1 and wound around a rotary head cylinder (not shown).

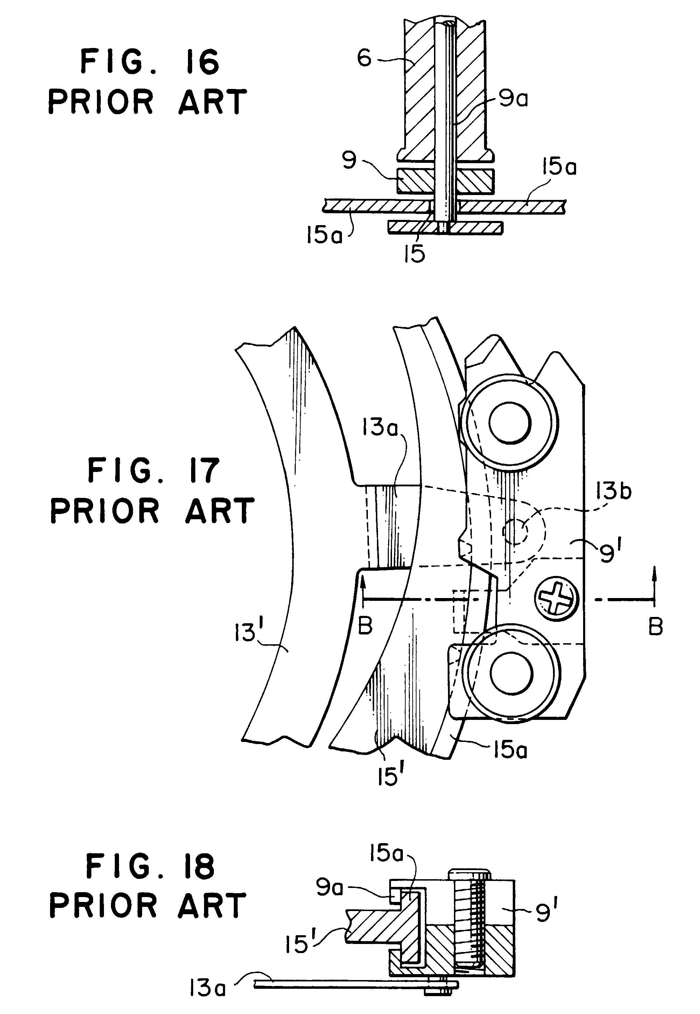

As shown in Fig. 16, the take-up side movable carrier 9 has a shaft 9a and the shaft 9a extends through the guide slot 15 of a loading guide plate 15a at the take-up side. The supply side movable carrier 8 also engages with the loading guide slot 14 of another loading guide plate in a similar manner.

However, the above conventional arrangement suffers from a problem in that the guide plates are required to retain the movable carriers 8 and 9 in the guide slots 14 and 15, respectively, thus limiting the amount by which the area occupied by the loading mechanism can be reduced preventing miniaturisation of VTRs.

EP-A2-0329180 discloses a similar arrangement to the conventional loading mechanism described above. However, it differs in that the guide slots for the movable carriers are provided in planar guide rails, at least one of which is inclined with respect to the cylinder head.

In view of the above, consideration has been given to using loading guide rails instead of conventional guide slots. More specifically, as shown in Fig. 17, an arm 13a extending from a ring 13' on the take-up side is connected with a take-up side movable carrier 9' through an engagement portion 13b so that, as the take-up side ring 13' rotates, the take-up side boat 9' is guided along a take-up side loading guide rail 15'.

In addition, as shown in Fig. 18, the take-up side loading guide rail 15' is provided along an outer circumference thereof with a T-Section rail portion 15a projecting up- and downwards at its peripheral edge. The take-up side movable carrier 9' is provided with a hook projection 9a arranged to engage the T-section portion 15a. The take-up side movable carrier 9' is securely held on the T-section portion 15a to be guided along the take-up side loading guide rail 15' on rotation of the take-up side ring 13'.

A loading mechanism at the supply side is also arranged in a similar manner and thus will not be explained herein.

According to the above known arrangement, however, because the take-up side movable carrier 9' is held through only the engagement between the T-section portion 15a and the hook projection 9a, to ensure secure holding of the take-up side movable carrier 9' it is necessary to extend the amount by which the portion 15a projects vertically to increase the extent by which the T-section portion 15a engages with the hook projection 9a, which leads to difficulties in reducing a height of the loading mechanism.

A loading post driving device as disclosed in applicant's copending European patent application No. 91308694.8 (publication No. EP-A2-0478278) will be described with particular reference to Figs. 19 and 20 of the drawings. EP-A2-0478278 comprises a part of the state of the art relevant to the present application under Article 54(3,4) EPC.

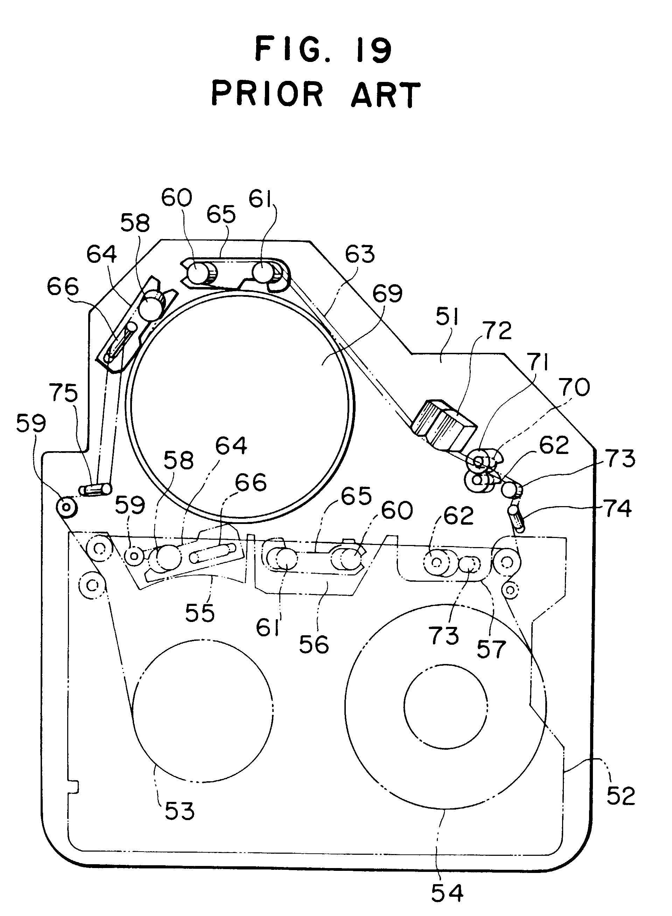

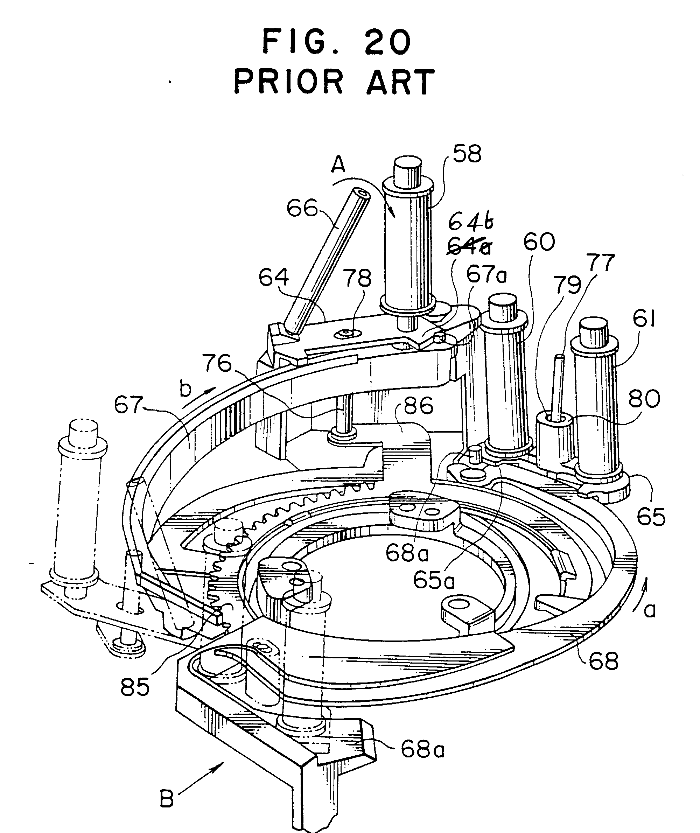

Fig. 19 is a schematic top plan view of the loading post driving device and Fig. 20 is a perspective view showing principal parts of the loading post driving device. Note that a rotary head cylinder 69 is omitted in Fig. 20 for brevity of the drawing and convenience of the description.

In Fig. 19, 51 denotes a chassis and 52 a tape cassette loaded on the chassis 51. A supply reel 53 and a take-up reel 54 are provided in the tape cassette 52. When the tape cassette 52 is loaded on the chassis 51, a supply side loading roller post 58 and a tension post 59; first and second take-up loading roller posts 60 and 61; and a pinch roller 62 are respectively positioned on the inside of a magnetic tape 63 in recesses 55, 56 and 57 formed in a front edge surface of the tape cassette 52. Denoted by 64 and 65 are a supply side movable carrier and a take-up side movable carrier on which the supply side loading roller post 58 and the first and second take-up side loading roller posts 60 and 61 are mounted, respectively. The supply side movable carrier 64 is also provided with an inclined post 66, in addition to the loading roller post 58, the inclined post 66 being positioned within the recess 55 together with the loading roller post 58. Denoted by 67 and 68 are a supply side arc shaped loading guide and take-up side arc shaped loading guide disposed along the circumference of a rotary head cylinder 69 as shown in Fig. 20, the guides 67 and 68 provided to respectively guide the supply side movable carrier 64 and the take-up side movable carrier 65 during the operation of loading the magnetic tape 63. Also as shown in Fig. 20, the supply side loading guide 67 is arranged such that an end of the guide 67 along which the movable carrier 64 returnably moves is raised higher than a proximal end of the guide 67 which is a home position of the movable carrier 64. On the other hand, the take-up side loading guide 68 is arranged such that an end of the guide 68 along which the movable carrier 65 returnably moves is lower than a proximal end of the guide 68 which is a home position of the movable carrier 65.

The supply side movable carrier 64 is driven by a supply side ring 85 having an arm 86 on a distal end portion of which a supply side drive shaft 76 is mounted. As will be seen from Fig. 20, the supply side movable carrier 64 is arranged to be vertically movable along the drive shaft 76 through a hole 78 in the movable carrier 64. The rotary head cylinder 69 is attached substantially vertically with respect to the chassis 51. When the supply side movable carrier 64 is moved along the supply side loading guide 67, the supply side loading roller post 58 withdraws the magnetic tape 63 from the supply reel 53 and winds it around the rotary head cylinder 69 in a direction extending obliquely upwardly along a left side surface area of the cylinder 69. When the take-up side movable carrier 65 is moved along the take-up side loading guide 68, the take-up side loading roller post 60 withdraws the magnetic tape 63 from the take-up reel 54 and winds it around the rotary head cylinder 69 in a direction extending obliquely downwardly along a right side surface area of the cylinder 69.

Denoted by 70 is a capstan provided on the chassis at a location outside where the tape cassette 52 is to be loaded, the capstan 70 being supported at its upper and lower ends by bearings 71 and attached to the chassis 51 such that it is inclined relative to the chassis at an angle substantially equal to those of the take-up side loading roller posts 60 and 61 at the tape terminal loading position. The inclined capstan 70 is brought into full contact with the magnetic tape 63 over its entire width, the tape running obliquely upwardly from the take-up side loading roller post 61 along a sloped path and being inclined forwardly. During completion of the tape loading operation, the capstan 70 is in press-contact with the pinch roller 62 which is moved from its position in the recess 57 of the tape cassette 52 so that the magnetic tape 63 is held between the capstan 70 and the pinch roller 62 to be driven thereby . Incidentally, the pinch roller 62 is arranged to have the same angle of inclination as that of the capstan 70 in order to be in full contact with the capstan 70 over the entire width of the tape. Denoted by 72 is an audio-control head provided at a location in the vicinity of the capstan 70 between the take-up side second loading roller post 61 when at the tape terminal loading position and the capstan 70. The audio-control head 72 is attached to the chassis 51 in such a manner that it is inclined at the same angle as that of the capstan 70 in order to facilitate contact between the audio-control head 72 and the magnetic tape 63 which is inclined forwardly and runs obliquely upwardly along a sloped path from the take-up side second loading roller post 61 to the capstan 70. Denoted by 73 is an auxiliary roller post which moves interlockingly with the pinch roller 62 such that it is positioned in the recess 57 of the tape cassette 52 before the start of the tape loading operation, and it moves together with the pinch roller 62 during the tape loading operation, thereby guiding the magnetic tape 63 running between the capstan 70 and the pinch roller 62 to a fixed inclined post 74. As regards the magnetic tape 63 fed from the take-up side second loading roller post 61 through the capstan 70 and the auxiliary roller post 73 whilst being in a forwardly-inclined posture, torsion of the magnetic tape 63 generated when the running path of the tape is converted from the sloped path into a horizontally running path is corrected by the inclined fixed post 74 which is slantingly attached to the chassis 51 before the magnetic tape 63 reaches the tape cassette 52, then the tape is wound around the take-up reel 54 of the tape cassette 52.

In the loading post driving device, as shown in Fig. 20, the movable carriers 64 and 65 are provided with holes 78 and 79 through which the carriers 64 and 65 are engaged with drive shafts 76 and 77, respectively. For smooth movement of the carriers 64 and 65 in the vertical and lateral directions, the holes 78 and 79 are formed to be somewhat larger than the diameters of the drive shafts 76 and 77. Therefore, the position of loading post becomes so unstable that it may incline undesirably. A means for preventing such undesirable inclination is provided by a projection 80 on the take-up side movable carrier 65 which supports the drive shaft 77 over a larger height, thereby increasing the stability of the loading post 61, as illustrated in Fig. 20.

With regard to the supply side movable carrier 64, however, since the inclined post 66 slants towards a location above the hole 78, it is impossible to provide a long projection extending upwardly as in the take-up side movable carrier 65. In addition, because the supply side loading post 58 is at a higher level relative to the drive shaft 76 at the tape terminal loading position, even if a short projection is provided on the carrier 64, the drive shaft 76 can not engage with the projection and thus stability cannot be enhanced and the loading post may incline toward the rotary head cylinder 69 as indicated by an arrow A in Fig. 20.

Thus, the above arrangement suffers from a problem in that when the unstable loading post inclines toward the rotary head cylinder, it may damage the rotary head cylinder or interfere with rotation thereof by possible contact between the two members.

A conventional loading post holding device will be next described with reference to the drawings.

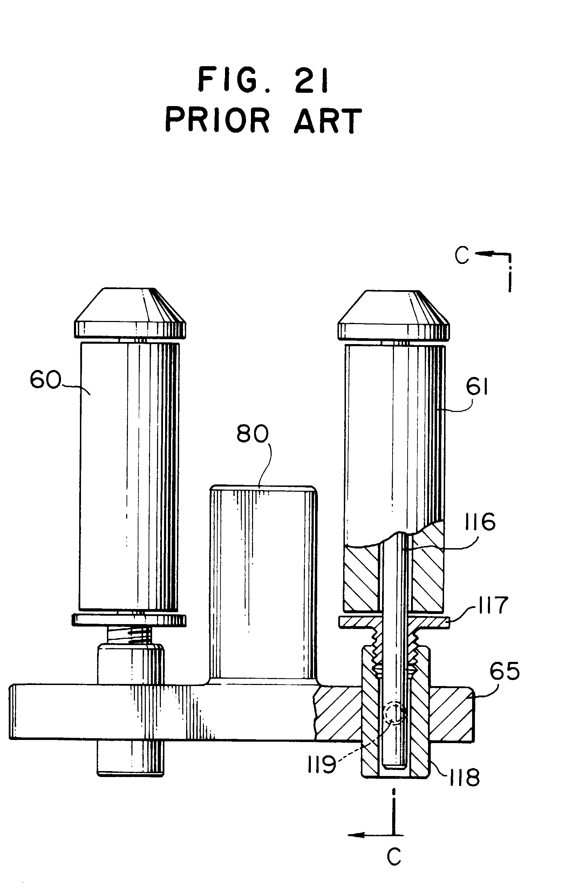

Fig. 21 is an enlarged view, partly cross-sectioned, as viewed in a direction of an arrow B in Fig. 20. In Fig. 21, 117 denotes a roller holder member for holding the roller or post 61 through which a shaft 116 is inserted. 118 denotes a pipe press-fitted in the take-up side movable carrier 65 with the end portion of the shaft 116 inserted into the pipe 118.

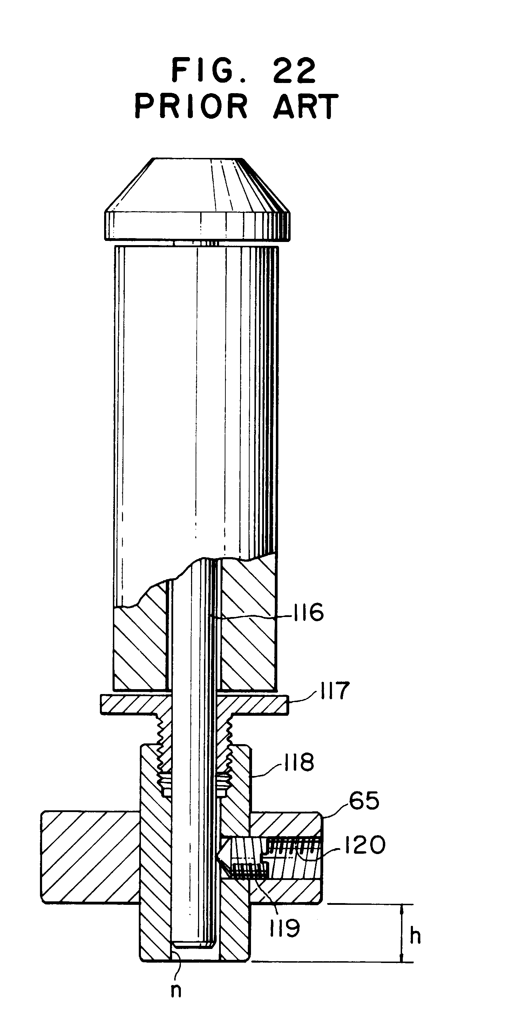

Fig. 22 is a view of a part of Fig. 21, partly cross-sectioned, as viewed in a direction of arrows C-C in Fig. 21. In Fig. 22, the shaft 116 is pressed against one side of the inner peripheral surface (a reference surface n) of the pipe 118 by the distal end of a screw 119 which is screwed into a threaded hole 120 provided at one end of the take-up side movable carrier 65, so that the shaft will not rotate. In order to press-fix the shaft 116 against the reference surface n by the distal end of the screw 119, the pipe 118 is extended downwardly below the underside of the take-up side movable carrier 65 to such a dimension h that a certain length of the shaft protrudes below the point where the shaft is pressed.

The operation of the conventional loading post holding device thus arranged will be explained below.

First, in an initial state where a tape cassette (not shown) is loaded, the supply side movable carrier 64 is on standby at its initial position (or home position) and the take-up side movable carrier 65 is on standby while being supported on a rest 68a, as indicated by phantom lines in Fig. 20. When a manual playback button (not shown) is pushed, power is transmitted to the ring gear 85 by a drive means (not shown) so that, on the supply side, the supply side movable carrier 64 is driven in a direction of an arrow b by the supply side drive shaft 76 (see Fig. 20). Likewise, on the take-up side, the take-up side movable carrier 65 is driven in a direction of an arrow a by the take-up side drive shaft 77. When a magnetic tape loading operation is completed, the supply side movable carrier 64 and the take-up side movable carrier 65 move to respective positions indicated by solid lines where a projection 64b of the supply side movable carrier 64 is in abutment against a lug 67a and a projection 65a of the take-up side movable carrier 65 is in abutment against a lug 68a.

However, the above loading post holding device of the prior art suffers from a problem in that in order to reduce the height of the magnetic recording/playback apparatus, the thickness of the take-up side movable carrier 65 must be reduced because of the take-up side loading guide 68 being inclined obliquely downwardly, but the take-up side movable carrier 65 requires a certain thickness for providing the threaded hole 120 into which the screw 119 is screwed to positively press-fix the shaft 116 against the reference surface n. In addition, positive press-fixing of the shaft 116 against the reference surface n also requires the pipe 118 to extend downwardly below the take-up side movable carrier 65 by the dimension h, making it difficult to reduce a total height of the loading post holding device.

Furthermore, in a conventional loading post driving device of a conventional magnetic recording/playback apparatus, means for turnably holding a loading ring to drive a loading post is generally arranged by providing shafts at several locations and holding the loading ring between a plurality of rollers mounted on each of the shafts.

Such an arrangement will be explained below with reference to the drawings

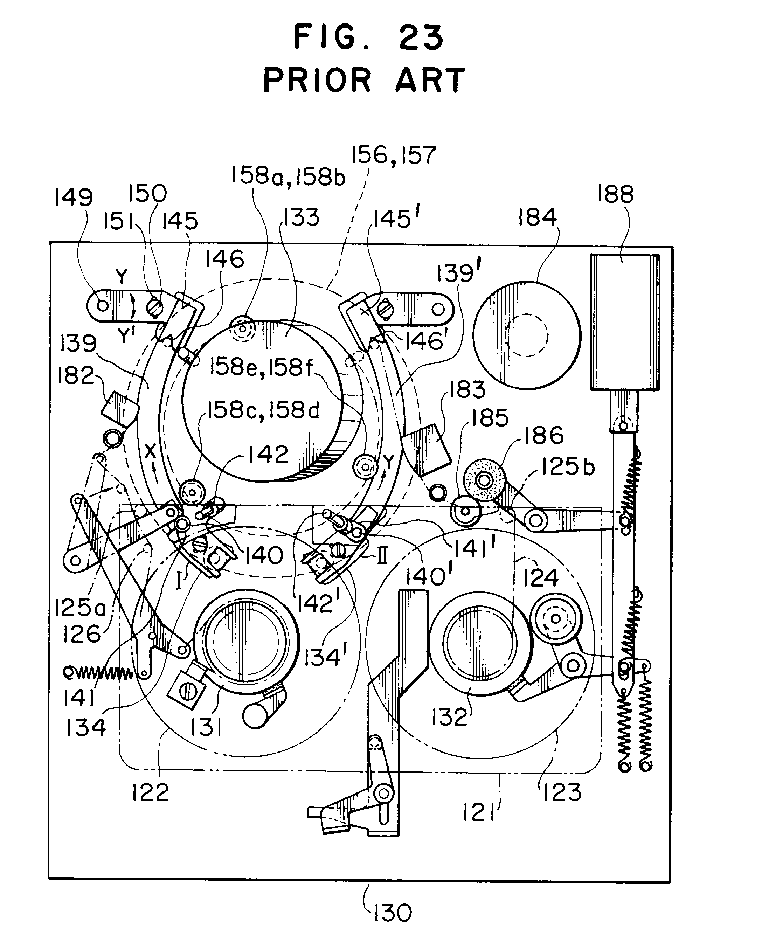

Fig. 23 shows a top plan view of a VTR body. Denoted by 121 is a cassette having a supply reel 122 and a take-up reel 123 both provided therein. Between the supply reel 122 and the take-up reel 123, a magnetic tape 124 is stretched through guide posts 125a, 125b and 126.

The cassette 121 rests on a base plate 130 at a predetermined position, the supply reel 122 in the cassette 121 is fitted over a supply reel stand 131, and further the take-up reel 123 is fitted over a take-up reel stand 132. 182 denotes an eraser head, 183 a control head, 184 a motor for a capstan and so forth, 185 a capstan, 186 an idler, and 188 a plunger. I and II denote a pair of magnetic tape withdrawer units for withdrawing the magnetic tape 124 out of the cassette 121 and winding it around the circumference of a rotary head cylinder 133 provided in an inclined position.

The description concerning an arrangement of the withdrawer unit I is given below.

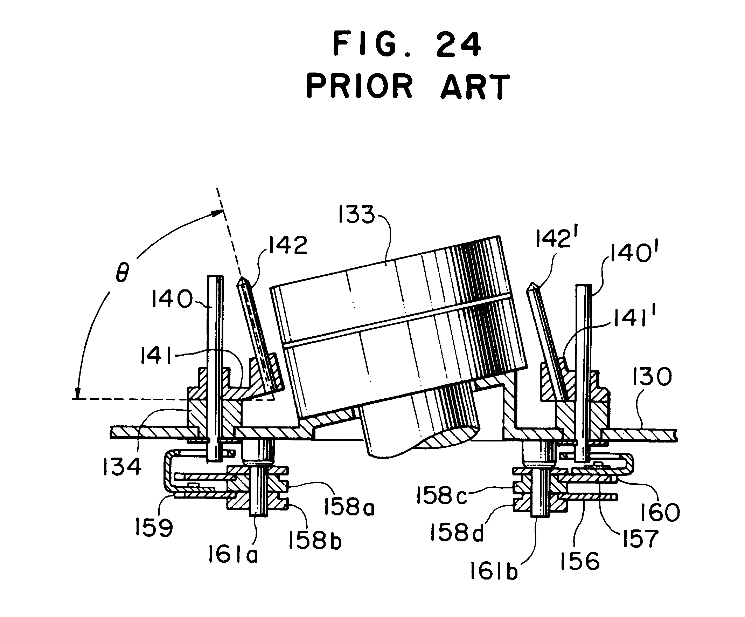

Fig. 24 is a cross-sectional view of the withdrawer unit I.

In Fig. 24, 133 denotes a rotary head cylinder around which the magnetic tape 124 is to be wound, and 156 and 157 are loading rings having gears 159 and 160 formed along the outer peripheral edges thereof and disposed on the underside of the base plate 130 one above the other in a concentric relationship. The loading rings 156 and 157 are held in place by three pairs of rollers 158 such as 158a, 158b; 158c, 158d; and 158e, 158f respectively fitted over roller pins or shafts 161a, 161b and 161c extending downwardly from the base plate 130 in such a manner as to be able to turn in directions opposite to each other. 140 denotes a loading post provided on a withdrawer unit base 134 which engages with the magnetic tape 124 to withdraw the magnetic tape 124 from the cassette 121 and, after completion of a tape withdrawing operation, to serve as one guide post for defining a running path of the magnetic tape. 141 denotes a correction post base on which a correction post 142 is mounted with an inclination of a predetermined angle θ.

Denoted by 139 is a guide slot for guiding sliding movement of the withdrawer unit which withdraws the magnetic tape 124 out of the cassette 121 and winds the same along the circumference of the rotary head cylinder 133 provided in an inclined position.

A stopper 145 is fixed onto the base plate 130 by a screw 150 with a shaft 149 serving as a guide. Since an attachment hole 151 has an elongated shape, the stopper 145 is turnable about the shaft 149 to some extent in directions of arrows Y - Y'.

The withdrawer unit II is symmetrical to the withdrawer unit I and thus will not be described herein.

The operation of the loading post driving device thus arranged will be explained below.

When a playback button (not shown) is pushed, a loading motor (not shown) starts rotating, whereupon a spur gear (not shown) is rotated through a worm gear (not shown) connected with a loading motor, thereby rotating the loading ring 156 held in mesh with the spur gear.

The withdrawer unit base 134 engaging with the loading ring 156 slides along the guide slot 139 in a direction of an arrow X, whereas a withdrawer unit base 134' slides along a guide slot 139' in a direction of an arrow Y. At this time, the magnetic tape 124 extends from the cassette 121 while remaining engaged with the loading posts 140 and 140' and the correction posts 142 and 142', and the loading posts 140 and 140' moving along the circumference of the rotary head cylinder 133 come into engagement with V-shaped grooves 146 and 146' which serve as stopper portions of the stoppers 145 and 145', respectively.

When the loading posts 140 and 140' abut against the V-shape grooves 146 and 146' of the respective stoppers. the loading motor (not shown) stops its rotation and the loading posts 140 and 140' remain stopped there without returning backwards.

Then, a plunger 188 is actuated to make an idler 186 abut against a capstan 185 for running the magnetic tape 124.

Additionally, when a stop button (not shown) is pushed, the device comes to a unloading state where the loading posts 140 and 140' are returned to their original positions.

However, the above conventional arrangement suffers from a problem in that since the means for holding the loading rings 156 and 157 in a turnable manner comprises providing roller pins at several locations and holding the loading rings one above the other by the rollers fitted over the roller pins serving as shafts, not only the number of parts used but also the number of assembling steps are increased.

An object of the present invention is to provide a loading post driving device which is compact and thin.

In the light of the above object, the present invention provides a loading post driving device for drawing out a magnetic tape from a tape cassette and winding said tape around a rotary head cylinder having a rotary head built therein, comprising: a movable carrier having a loading post for withdrawing the tape, said loading post being mounted on the movable carrier and extending upwardly therefrom; a substantially arc shaped loading guide for guiding said movable carrier along the circumference of said rotary head cylinder between a home position from which the tape is withdrawn and an end position at which withdrawal of the tape is completed, the loading guide at one of said positions being raised higher than at the other of said positions; a drive ring having a drive shaft for transmitting driving force from a drive source to said movable carrier, said drive shaft being mounted on the drive ring and extending upwardly therefrom and being inserted in a hole in the movable carrier, characterised in that the drive shaft is inserted in the hole in the movable carrier such that the movable carrier moves vertically on side drive shaft as said drive ring turns to cause said movable carrier to move between said home position and said end position, and the movable carrier has an engagement portion including a claw, the engagement portion engages a stepped portion at one side edge of said loading guide to receive a rib comprising said stepped portion between said claw and a main body part of the movable carrier.

With the above arrangement, the movable carrier on which the loading post is mounted can be held on the loading guide through the engagement portion. Further, the drive shaft inserted through the hole in the movable carrier enables more positive holding of the carrier on the loading guide.

The features of the present invention will be described with reference to the drawings, of which:-
Fig. 1 is a perspective view of principal parts of a loading post driving device of an embodiment of the invention.
Fig. 2 is a perspective view of a schematic arrangement of the first embodiment;
Fig. 3 is a top plan view showing a section of the embodiment of figure 1;
Fig. 4 is a cross-sectional view taken along a line IV - IV in Fig. 3;
Fig. 5 is a cross-sectional view taken along a line V - V in Fig. 3;
Fig. 6 is an enlarged partial view of a loading post holding device;
Fig. 7 is an exploded perspective view of the loading post holding device of Fig. 6;
Fig. 8A is a bottom view of a supply side movable carrier forming part of the loading post holding device of Fig. 6;
Fig. 8B shows a coil spring removed from the supply side movable carrier;
Fig. 8C shows the coil spring of Fig. 8B;
Fig. 9A is a view showing the relationship between a loading post and a drive shaft in the loading post holding device;
Fig 9B is a view showing the loading post holding device in use;
Fig 10 is a view, partly cross-sectioned, of another loading post holding device;
Fig. 11 is an enlarged view, partly cross-sectioned, of the loading post holding device of Fig. 10;
Fig. 12 is an exploded perspective view of loading rings and a loading ring guide of a loading post driving device;
Fig. 13 is a perspective view showing the loading ring guide and loading rings in an assembled form;
Fig. 14 is a cross-sectional view of the loading ring guide;
Fig. 15 is a top plan view of a prior art loading post driving device;
Fig. 16 is a cross-sectional view taken along a line A-A in Fig. 15;
Fig. 17 is a top plan view showing another prior art loading post driving device;
Fig 18 is a cross-sectional view taken along a line B-B in Fig. 17;
Fig. 19 is a schematic top plan view of a prior art magnetic recording/playback apparatus;
Fig. 20 is an enlarged perspective view showing principal parts of the prior art loading post driving device of Fig. 19;
Fig 21 is a view, partly cross-sectioned, taken in a direction of an arrow B in Fig. 20;
Fig. 22 is a view of a part of Fig. 21, partly cross-sectioned, as viewed in a direction of a line C-C in Fig. 21;
Fig. 23 is a top plan view of another prior art magnetic recording/playback apparatus; and
Fig. 24 is a cross-sectional view of a withdrawer unit I in the apparatus of Fig. 23.

An embodiment of the invention will be described hereinafter with reference to the drawings.

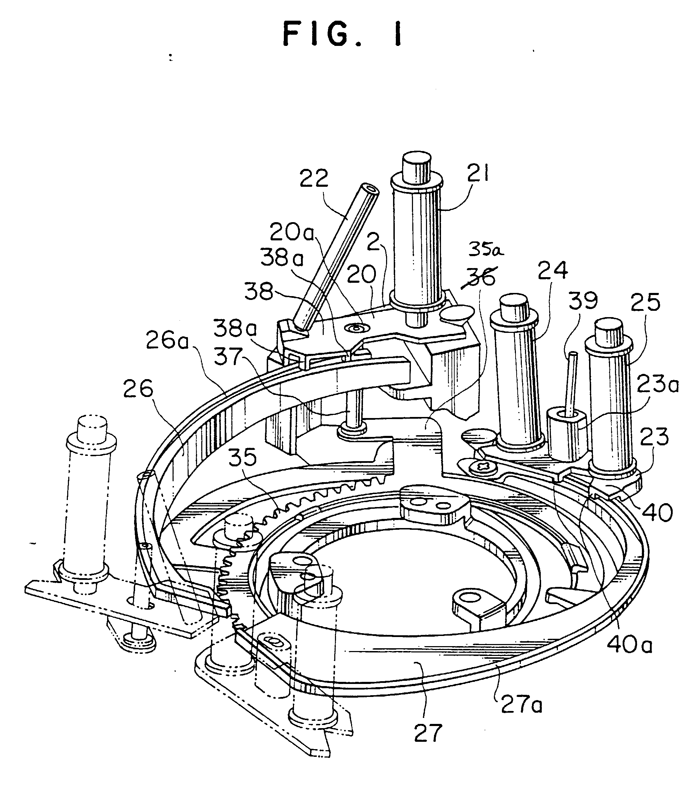

Fig. 1 is a perspective view showing principal parts of a loading driving device according to an embodiment of the invention.

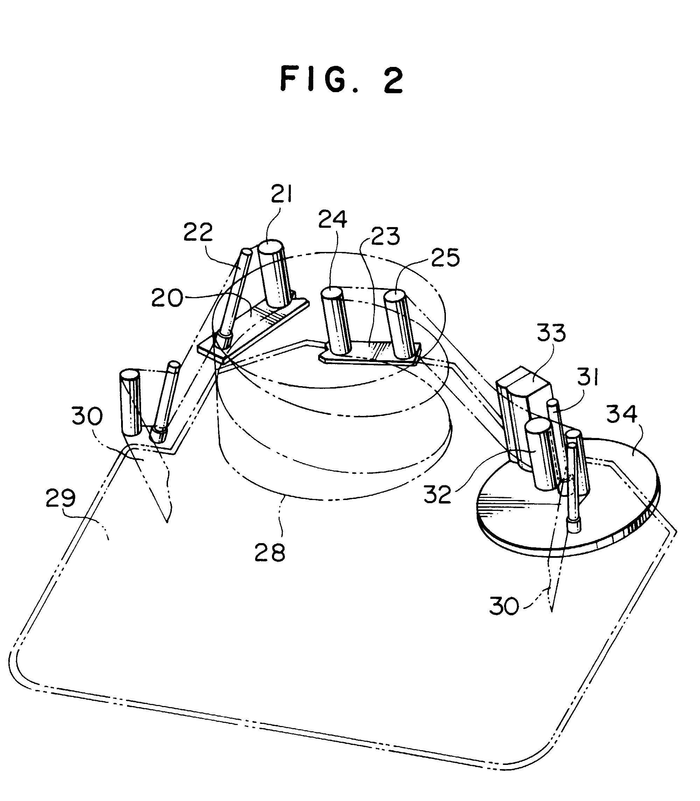

In Fig. 1, denoted by 20 is a supply side movable carrier on which a supply side loading roller post 21 and an inclined post 22 are mounted which extend upwardly therefrom, whereas 23 denotes a take-up side movable carrier on which first and second take-up side loading roller posts 24 and 25 are mounted and which extend upwardly therefrom. 26 denotes an arc shaped loading guide at the supply side and 27 denotes an arc shaped loading guide at the take-up side, both disposed along the circumference of a rotary head cylinder 28 (Fig. 2), the guides 26 and 27 being provided to guide the supply side movable carrier 20 and the take-up side movable carrier 23, respectively. The supply side loading guide 26 is arranged such that an end of the guide 26 along which the carrier 20 returnably moves is raised higher than a proximal end of the guide 26 which is a home position of the carrier 20. Said end position, where a magnetic tape loading operation is completed, defines the tape terminal loading position. The take-up side loading guide 27 is arranged such that an end of the guide 68 along which the carrier 23 returnably moves is lower than a proximal end of the guide 68 which is a home position of the carrier 23.

The rotary head cylinder 28 is attached substantially vertically with respect to a chassis 29. As shown in Fig. 2, when the supply side movable carrier 20 moves along the supply side loading guide 26, the supply side loading roller post 21 withdraws a magnetic tape 30 from a supply reel (not shown) and winds it around the rotary head cylinder 28 in a direction extending obliquely upwardly on the left side of the rotary head cylinder 28. On the other hand, when the take-up side movable carrier 23 is moved along the take-up side loading guide 27, the take-up side first loading roller post 24 withdraws the magnetic tape 30 from a take-up reel (not shown) and winds it around the rotary head cylinder 28 in a direction extending obliquely downwardly toward the right side of said rotating head cylinder 28.

Denoted by 31 is a capstan provided on the chassis 29 such that it is inclined relative to the chassis at an angle substantially equal to those of the take-up side first and second loading roller posts 24 and 25 at the tape terminal loading position. The inclined capstan 31 is brought into full contact with the magnetic tape 30 over its entire width which runs obliquely upwardly from the take-up side second loading roller post 25 and is forwardly inclined. Thus, the magnetic tape 30 is fed while being held between the capstan 20 and a pinch roller 32 which has an angle of inclination the same as that of the capstan 31.

Denoted by 33 is an audio-control head disposed on the chassis 29 such that it is inclined at the same angle as that of the capstan 31 in order to make a full contact with the magnetic tape 30 over its entire width.

Denoted by 34 is a capstan motor for driving the capstan 31 which is also inclinedly attached to the chassis 29. With such an arrangement, the capstan 31 is not required to extend below the bottom of a tape cassette (not shown) at its loaded position unlike the prior art, making it possible to reduce a thickness of the chassis 29 and thus facilitate reduction of the device height.

Denoted by 35 is a supply side ring for driving the supply side movable carrier 20, a fixed arm 35a extending from a part of the ring 35 and a supply side drive shaft 37 mounted on a distal end portion or the arm 35a and extending upwardly therefrom. As will be seen from Fig. 1, the supply side movable carrier 20 is arranged to be movable vertically about a supply side hole 20a, and it also includes at its rear end a supply side holder portion 38 engaging with a stepped portion (or rib) 26a provided on the top of the supply side loading guide 26 along the outer periphery (or side edge) of the arc shaped guide 26. The supply side holder portion 38 has a pair of claws 38a engaging with the stepped portion 26a. Thus, the supply side movable carrier 20 is guided along the supply side loading guide 26 while being positively held without departing from the guide 26.

Likewise, the take-up side movable carrier 23 is arranged to be movable vertically on a take-up side drive shaft 39 inserted through a substantially cylindrical portion 23a of the carrier 23, and it also includes at its rear end a holder portion 40 engaging with a stepped portion (or rib) 27a provided on the top of the take-up side loading guide 27 along the outer periphery (or side edge) of the guide 27. The take-up side holder portion 40 has a pair of claws 40a engaging with the stepped portion 27a. Thus, the take-up side carrier 23 is guided along the take-up side loading guide 27 while being positively held without departing from the guide 27.

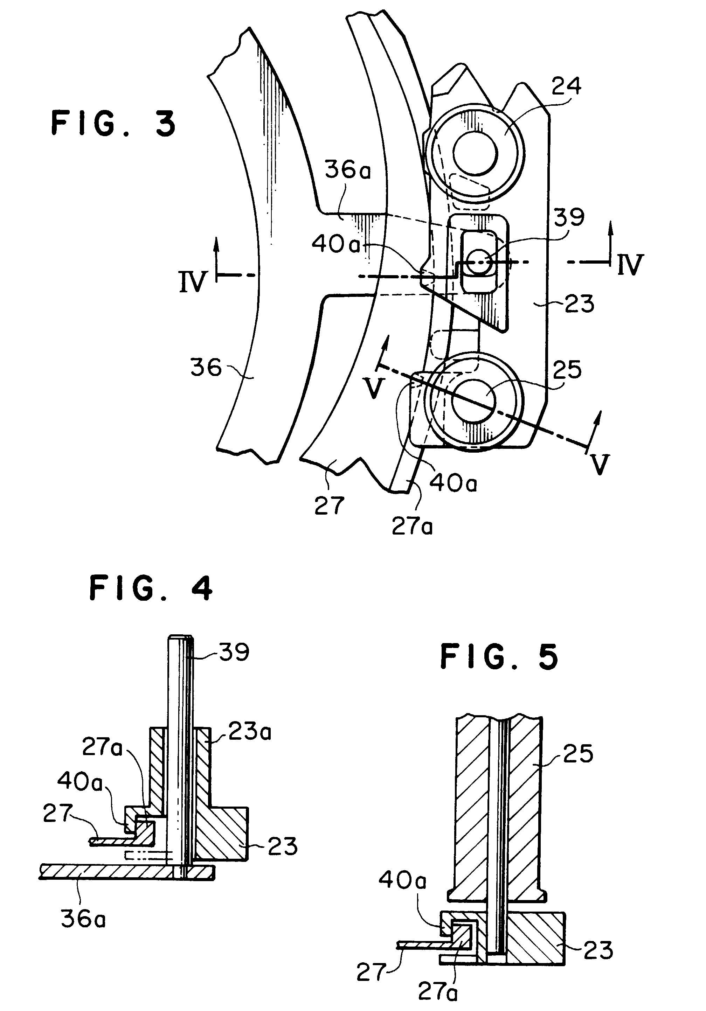

For more clarity, the above arrangement of the loading post driving device will now be explained with reference to Figs. 3 to 5. Fig. 3 is a top plan view illustrating the relationship between the take-up side carrier and the take-up side loading guide, and Figs. 4 and 5 are cross-sectional views taken along lines IV - IV and V - V of Fig. 3, respectively.

In these drawings, 36 denotes a take-up side ring for driving the take-up side movable carrier 23. An arm 36a extends from a part of the ring 36 and has a take-up side drive shaft 39 mounted at a distal end portion of the arm 36a and which extends upwardly therefrom.

As will be seen from Figs. 4 and 5, the take-up side movable carrier 23 is held through the engagement between the take-up side stepped portion 27a of the take-up side loading guide 27 and the take-up side claws 40a of the take-up side movable carrier 23. With such an arrangement alone, however, the take-up side movable carrier 23 cannot be held as efficiently as in the prior art method of using a T-section guide rail as shown in Fig. 18. In other words, because the take-up side movable carrier 23 may turn about the take-up side claws 40a, it cannot be held in place with certainty. In view of this, by arranging the take-up side drive shaft 39 provided on the take-up side ring 36 to be inserted through a hollow space of the take-up side substantially cylindrical portion 23a provided on the take-up side movable carrier 23, the take-up side movable carrier 23 is prevented from turning, so that it is positively held on the take-up side loading guide 27.

This makes it possible to hold the take-up side movable carrier 23 without the need to establish a sufficient degree of engagement between the take-up side stepped portion 27a and the take-up side claws 40a, and thus remarkably reducing the device height.

Additionally, by increasing a height of the take-up side substantially cylindrical portion 23a, play produced between the take-up side drive shaft 39 and the take-up side substantially cylindrical portion 23a is reduced to enable more positive holding of the take-up side movable carrier 23.

Note that the supply side movable carrier 20 is arranged in a similar manner and thus will not be described herein.

As will be apparent from the above, according to the embodiment of the present invention, since a drive shaft is utilised as not only the means for transmitting driving force to a loading movable carrier, but also as a means for holding a loading movable carrier on a loading guide, the loading movable carrier can be guided along the loading guide in a more reliable and stable manner.

Further, since a sufficient degree of holding force can be obtained even if the engagement between a stepped portion of the loading guide and an engaging portion of the loading movable carrier is made less in its extent, it is possible to remarkably reduce a thickness of the loading mechanism.

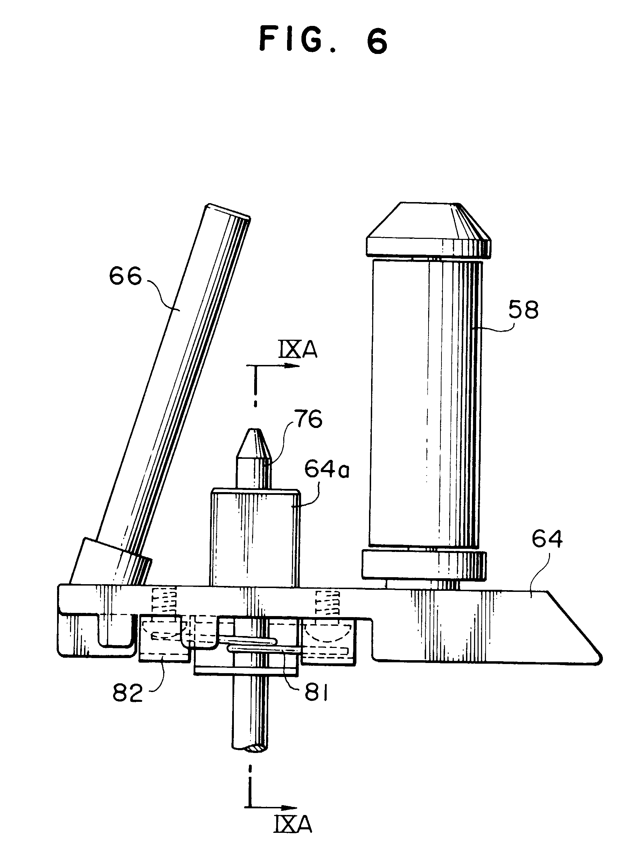

Next, an embodiment of a loading post driving device will be described with reference to Figs. 6 to 9. Note that the same components in this embodiment as those in the prior art are denoted by the same reference numerals and the description concerning those components is omitted.

Fig. 6 is an enlarged view showing principal parts of a loading post driving device in a magnetic recording/playback apparatus. Fig. 6 shows a state where a supply side carrier 64 is engaged with a drive shaft 76. This example is different from the prior art in that a coil spring 81 is provided under the supply side movable carrier 64. 82 denotes a fixture also provided below the supply side movable carrier 64 for retaining the coil spring 81. Further, 64a is a projection formed on the top surface of the supply side movable carrier 64. Since an inclined post 66 is slanting toward a location above the projection 64a, the projection can only be increased by so much in its height.

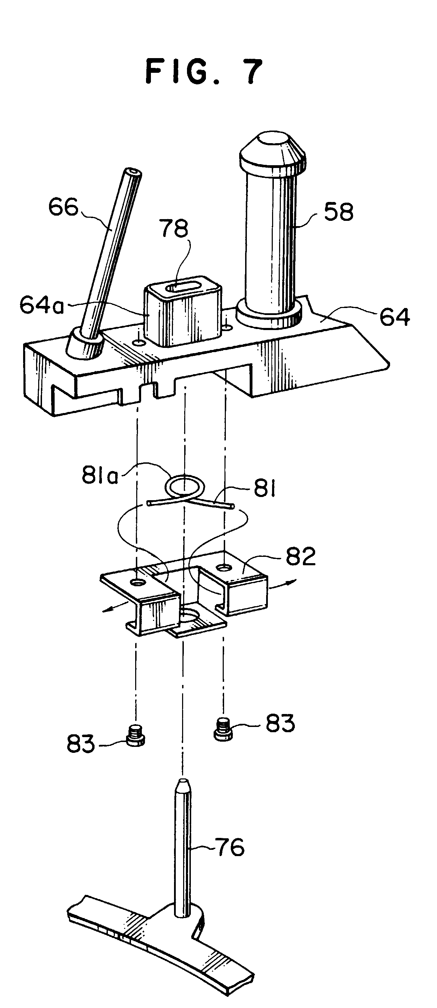

Fig. 7 is an exploded perspective view of the loading post driving device shown in Fig. 6. The coil spring 81 is attached to the fixture 82 which is in turn fixed by screws 83 to the underside of the supply side movable carrier 64. The supply side drive shaft 26 is assembled by being inserted through both a ring portion 81a of the coil spring 81 and a hole 78 of the projection 64a on the supply side movable carrier 64.

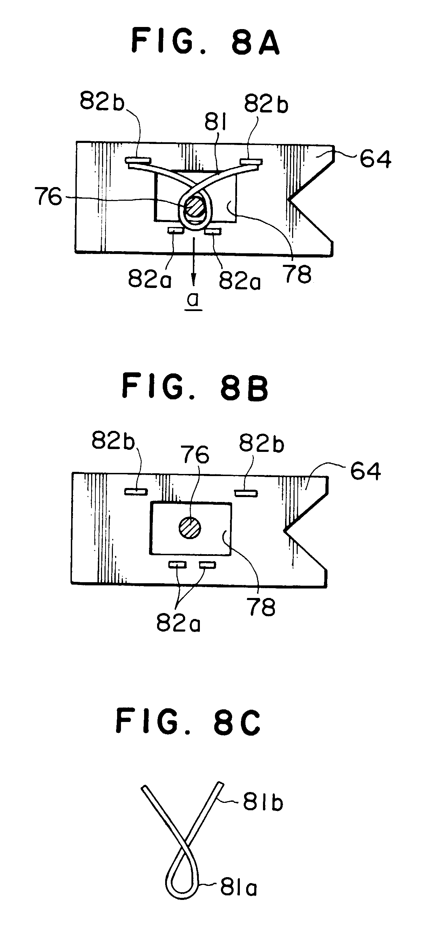

Figs. 8A to 8C are views illustrating an operation of the coil spring 81 provided on the supply side movable carrier 64. For the sake of brevity, the fixture 82 is shown in a simplified form by illustrating only its claws 82a and 82b.

Fig. 8A shows the supply side movable carrier 64 as viewed from the backside. As seen from the drawing, the coil spring 81 is retained at both ends by the claws 82a and 82b. Figs. 8B and 8C show the supply side movable carrier 64 and the coil spring 81, respectively, which are disassembled in contrast with Fig. 8A. As seen from Fig. 8C, in a normal state, free end sections 81b of the coil spring 81 are not so bent with respect to the ring portion 81a. Therefore, when the coil spring 81 is attached to the supply side boat 64 such that the free end sections 81b are retained in a bent state by the claws 82a and 82b as shown in Fig. 8A, an urging force in a direction of an arrow a in Fig. 8A is applied to the ring portion 81a of the coil spring 81. Thus, an urging force in the direction of the arrow a is also applied to the drive shaft 76.

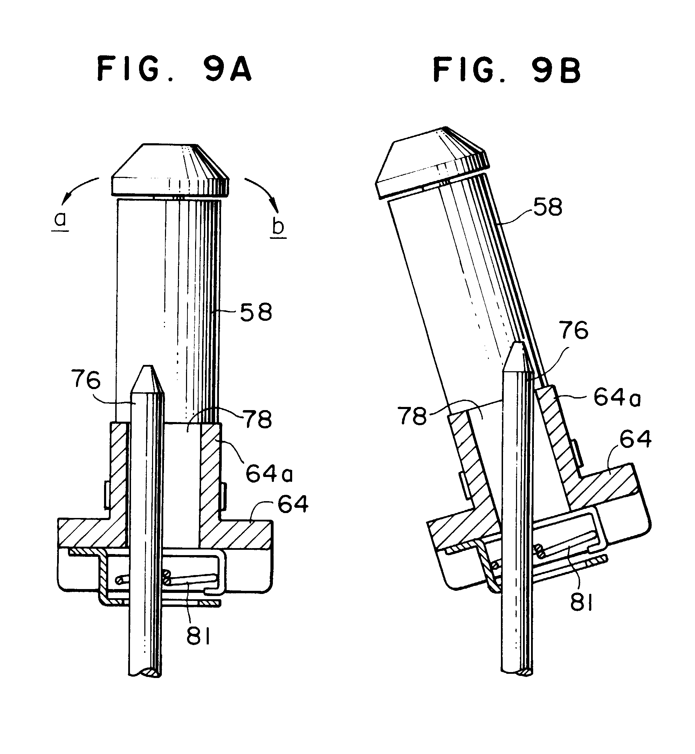

Figs 9A and 9B are each a cross-sectional view taken along a line IXA - IXA in Fig.6, showing the relationship between a loading post 58 and the drive shaft 76 resulting from the coil spring 81 pressing on the drive shaft 76. Since the coil spring 81 provided on the underside of the supply side movable carrier 64 presses the drive shaft 76 aside as explained above, the drive shaft 76 is always in a state biased to one side in the hole 78 as shown in Fig. 9A. In this state, the drive shaft 76 is fixed vertically relative to the chassis at all times. Accordingly, even when the supply side loading post 58 is inclined relative to the drive shaft 76, it can incline in a direction of an arrow a in Fig. 9A to come into a state as shown in Fig. 9B, but can never incline in a direction of an arrow b. This is because the drive shaft 76 is positioned by the coil spring 81 against one lower end of the hole 78.

Thus, by arranging the rotary head cylinder on the side indicated by the arrow b in Fig 9A, the loading post can be prevented from contacting with the rotary head cylinder.

Stated in another way, inclining of the loading post can be limited to only one direction by providing the coil spring on the underside of the supply side movable carrier, and the loading post can be prevented from damaging the rotary head cylinder or interfering with its rotation by allowing the loading post to incline away from the rotary head cylinder. As a result, a loading post driving device with high reliability can be provided.

While the coil spring is provided on the supply side movable carrier in this example, it may be provided on only the take-up side movable carrier or on both of the supply side and take-up side movable carriers.

Also, while the pressing means is provided on the under-side of the supply side movable carrier in this example, it may be provided on the upper side of the supply side movable carrier. In this case, however, a direction of pressing the drive shaft must be opposite to that in the above embodiment to obtain a similar effect.

Further, while the coil spring is used as a pressing means in this example, a leaf spring may be used instead.

As set forth above, according to the above embodiment of a loading post driving device, since a loading movable carrier is provided with a pressing means to press a drive shaft, the upper end of a loading post can be always kept apart from a rotary head cylinder. It is thus possible to provide a loading post driving device which can prevent the loading post from damaging the rotary head cylinder or interfering with its rotation, and can allow a miniature, light magnetic recording/playback apparatus with high reliability to be realised.

Next, another embodiment of a loading post driving device will be described with reference to the drawings.

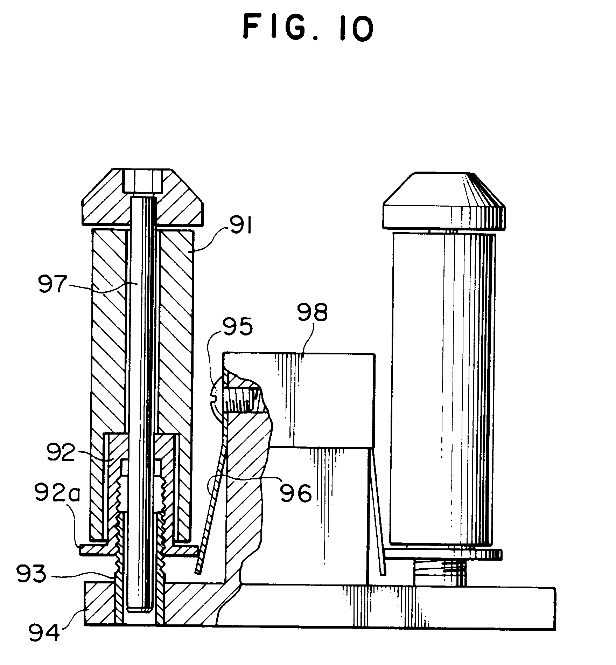

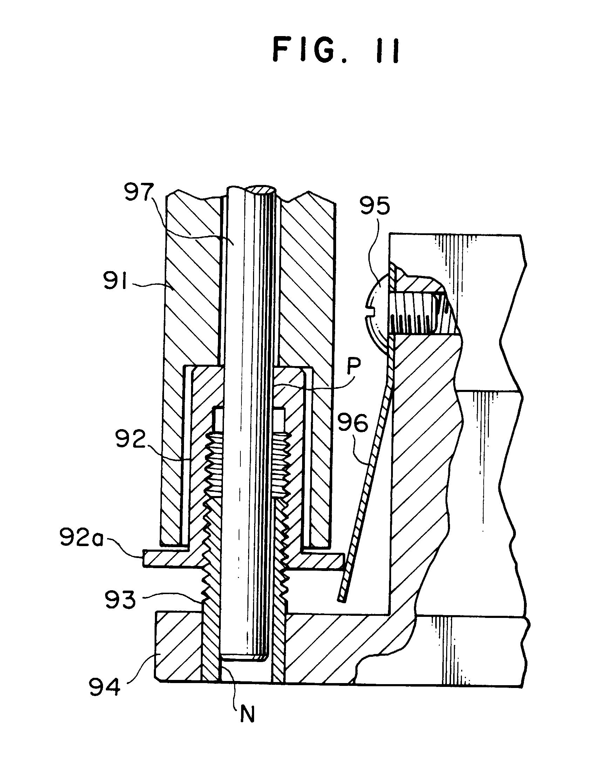

Fig. 10 is a view, partly cross-sectioned, of another loading post holding device, and Fig. 11 is an enlarged view, partly cross-sectioned, of Fig. 10.

In Figs. 10 and 11, denoted by 91 is a take-up side roller which comes into contact with a magnetic tape (not shown) during an operation of loading the tape. The take-up side roller 91 receives a shaft 97 inserted therethrough and has a thinner wall in its lower portion. 92 denotes a roller holder member which has an upper end for holding the take-up side roller 91 such that it will not slip downwardly, and has an inner peripheral surface against which a shaft 97 is press-fitted. The roller holder member 92 is formed at a lower end thereof with a flange 92a which extends outwardly, and a lower portion of the inner peripheral surface of the member 92 is threaded. 93 denotes a pipe, an upper portion of an outer peripheral surface of which is screwed into the threaded portion of the roller holder member 92, and a lower portion of which is fixedly press-fitted into a take-up side movable carrier 94. Thus, the roller holder member 92 is arranged such that its height can be changed to some extent by adjusting the screwed engagement between the member 92 and the pipe 93. A spring (urging member) 96 is fixed by a screw 95 to a lateral surface of a projection 98 formed at the centre of the take-up side movable carrier 94, the spring 96 pressing outwardly on the inner edge of the flange 92. Note that the right side of the boat 94 in Fig. 10 is arranged in a similar manner to the left side and thus will not be explained.

The operation of the thus-arranged loading post holding device according to this embodiment will now be described. Since the loading post holding device of this embodiment operates almost like the prior art device explained above by reference to Fig. 20, the only difference therebetween is given below.

At a loading start position (first position or home position), the take-up side movable carrier 94 is on standby at the position indicated by phantom lines in Fig. 20. The take-up side movable carrier 94 is moved by drive means (not shown) in a direction of an arrow a along the take-up side loading guide 68 (Fig. 20), followed by its stopping at a tape terminal loading position (second position).

While the take-up side movable carrier 94 in the loading post holding device is moving from the loading start position to the tape terminal loading position, the flange 92a is pressed by the spring 96 at all times as shown in Fig. 11. The force borne by the flange 92a in turn presses the shaft 97 against a reference surface N of the pipe 93 through a press-fitted portion P of the roller holder member 92. Note that the screw-engagement holder member 92 is usually looser than the fitting relationship between the pipe 93 and the shaft 97. In this regard, Fig. 11 is not an exact representation.

Further, although the height of the roller holder member 92 can be controlled by adjusting the screwed engagement with the pipe 93 as stated above, the roller holder member 92 is prevented from turning by the presence of the spring 96 in course of driving between the first and second positions, because the flange 92a is always pressed by the spring 96.

As explained above, according to this embodiment, since the point of pressing the shaft 97 can be located at so high a level relative to the take-up side movable carrier 94, the distance between the lower end surface of the roller 91 and the lower end surface of the pipe 93 can be made smaller. In addition, since it is unnecessary to insert a screw into the take-up side movable carrier 94 from its lateral face, the take-up side movable carrier 94 is only required to have a height sufficient to hold the pipe 93 by press-fitting. This enables a considerable reduction in a total height of the loading post holding device. As a result, by using the roller post holder member of this embodiment in a magnetic recording/playback apparatus, it is possible to reduce the height and realise a smaller magnetic recording/playback apparatus.

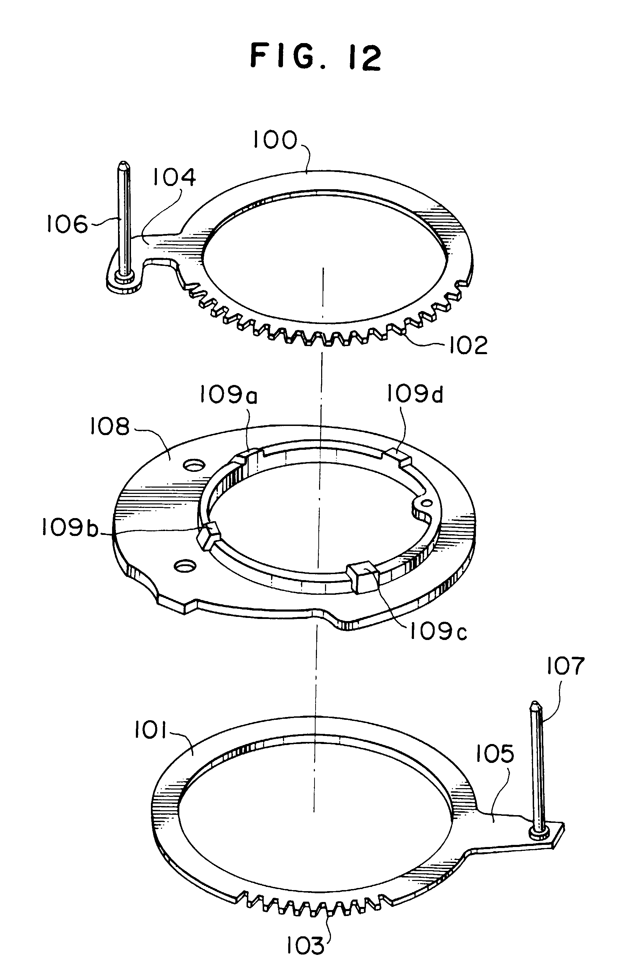

Next, yet another embodiment of loading post driving device will be described with reference to Figs. 12 to 14.

Fig. 12 is a perspective view of loading rings and a loading ring guide of the loading post driving device.

In Fig. 12, 100 denotes a supply side loading ring which has a toothed region 102 along the outer peripheral edge thereof and a fixed arm 104, with a supply side drive shaft 106 mounted on a distal end of the fixed arm 104 and extending upwardly therefrom. 101 denotes a take-up side loading ring which has a diameter slightly larger than that of the supply side loading ring 100 and is arranged in a similar manner thereto. 108 denotes a loading ring guide which has a plurality of claws 109a, 109b, 109c and 109d arranged along an inner peripheral edge and is molded as one piece by using resin such as polyacetal.

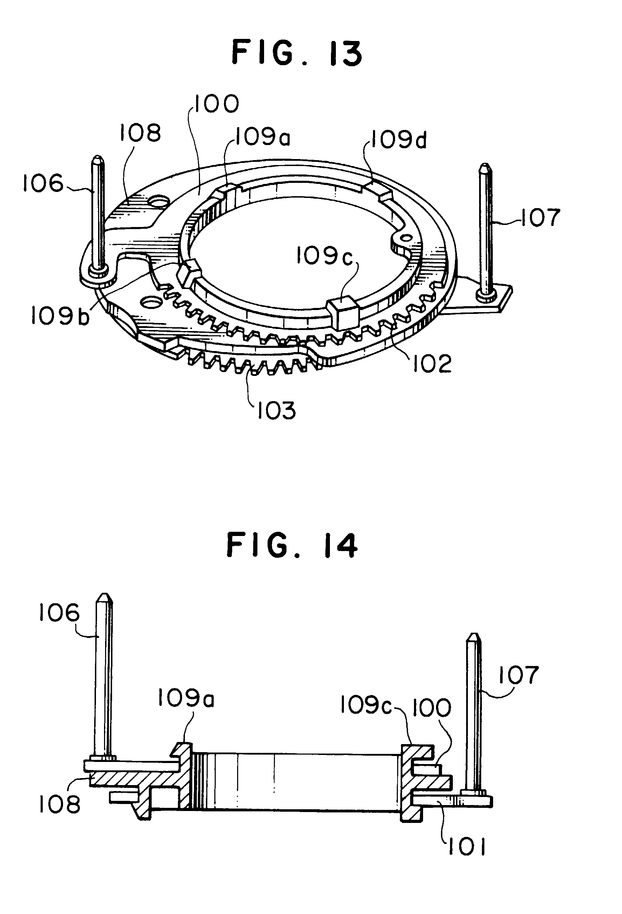

As show in Figs. 13 and 14, the loading rings 100 and 101 are fitted to the claws 109a, 109b, and 109c and 109d of the loading ring guide 108 so that the loading rings 100 and 101 are assembled with the loading ring guide 108 in a turnable manner.

Of the claws 109a, 109b, 109c and 109d of the loading ring guide 108, the claws 109a and 109b have tapered portions, whereas the claws 109c and 109d have no tapered portions and are formed to be somewhat larger than the claws 109a and 109b.

With such an arrangement, the loading ring 100 can be assembled with the loading ring guide 108 by the simple steps of first fitting the loading ring 100 to the claws 109c and 109d of the loading ring guide 108, and then pushing the loading ring 100 from above the tapered portions of the claws 109a and 109b. After assembly, the loading ring 100 will not disconnect from the loading ring guide 108 due to the presence of the claws 109a, 109b, 109c and 109d.

The loading ring 101 can be assembled in a similar manner to the loading ring 100.

As described above, according to the above embodiment, since a loading ring guide is fabricated as a one-piece molding and the loading ring guide is provided with holders adapted to assemble the loading rings and the loading ring guide in a turnable manner, the number of parts used can be reduced and the assembling efficiency can be improved.

## Claims

1. A loading post driving device for drawing out a magnetic tape from a tape cassette and winding said tape around a rotary head cylinder having a rotary head built therein, comprising: a movable carrier (20;23) having a loading post (21;24) for withdrawing the tape (30), said loading post (21;24) being mounted on the movable carrier (20;23) and extending upwardly therefrom; a substantially arc shaped loading guide (26;27) for guiding said movable carrier (20;23) along the circumference of said rotary head cylinder (28) between a home position from which the tape (30) is withdrawn and an end position at which withdrawal of the tape (30) is completed, the loading guide (26;27) at one of said positions being raised higher than at the other of said positions; a drive ring (35;36) having a drive shaft (37;39) for transmitting driving force from a drive source to said movable carrier (20;23), said drive shaft (37;39) being mounted on the drive ring (35;36) and extending upwardly therefrom and being inserted in a hole (20a;23a) in the movable carrier (20;23), characterised in that the drive shaft (37;39) is inserted in the hole (20a;23a) in the movable carrier (20;23) such that the movable carrier (20;23) moves vertically on side drive shaft (37;39) as said drive ring (35;36) turns to cause said movable carrier (20;23) to move between said home position and said end position, and the movable carrier (20;23) has an engagement portion (38;40) including a claw (38a;40a), the engagement portion (38;40) engages a stepped portion (26a;27a) at one side edge of said loading guide (26;27) to receive a rib comprising said stepped portion (26a;27a) between said claw (38a;40a) and a main body part of the movable carrier (20;23).

2. A loading post driving device as claimed in claim 1, characterised in that the stepped portion (26a;27a) is provided along an outer peripheral side edge of the loading guide (26;27).

3. A loading post driving device as claimed in claim 1 or claim 2, characterised in that the engagement portion (38;40) of the movable carrier (20;23) comprises a holder portion (38;40) at a rear end only of the movable carrier (20;23).

4. A loading post driving device as claimed in any preceding claim, characterised in that the engagement portion (38;40) has a pair of claws (38a;40a) for engaging with the stepped portion (26a;27a).

5. A loading post driving device as claimed in any preceding claim, characterised in that the movable carrier (23) is a take-up side movable carrier (23).

6. A loading post driving device as claimed in any preceding claim, characterised in that said hole (23a) provided in said movable carrier (23) through which said drive shaft (39) is inserted includes a projection (23a) around said hole (23a) to increase a depth of said hole.

## Patentansprüche

1. Antriebsvorrichtung für einen Ladestift zum Herausziehen eines Magnetbandes aus einer Bandkassette und zum Herumwickeln des Bandes um einen rotierenden Kopfzylinder, in den ein rotierender Kopf eingebaut ist, umfassend: einen beweglichen Träger (20; 23), der einen Ladestift (21; 24) zum Abziehen des Bandes (30) hat, wobei der Ladestift (21; 24) auf dem beweglichen Träger (20; 23) angebracht ist und von diesem nach oben ragt; eine im wesentlichen bogenförmige Ladeführung (26; 27) zum Führen des beweglichen Trägers (20; 23) entlang dem Umfang des rotierenden Kopfzylinders (28) zwischen einer Ruhestellung, aus der das Band (30) abgezogen wird, und einer Endstellung, in der das Abziehen des Bandes (30) abgeschlossen ist, wobei die Ladeführung (26; 27) in einer dieser Stellungen höher angehoben ist als in der anderen Stellung; einen Antriebsring (35; 36), der eine Antriebswelle (37; 39) hat, um eine Antriebskraft von einer Antriebsquelle auf den beweglichen Träger (20; 23) zu übertragen, wobei die Antriebswelle (37; 39) auf dem Antriebsring (35; 36) angebracht ist und von diesem nach oben ragt und in eine Öffnung (20a; 23a) des beweglichen Trägers (20; 23) eingesetzt ist, dadurch **gekennzeichnet,** daß die Antriebswelle (37; 39) derart in die Öffnung (20a; 23a) des beweglichen Trägers (20; 23) eingesetzt ist, daß sich der bewegliche Träger (20, 23) auf der Antriebswelle (37; 39) vertikal bewegt, wenn sich der Antriebsring (35; 36) verdreht, um den beweglichen Träger (20; 23) zwischen der besagten Ruhestellung und der besagten Endstellung zu bewegen, und daß der bewegliche Träger (20; 23) einen Eingriffsbereich (38; 40) mit einer Klaue (38a; 40a) hat, daß der Eingriffsbereich (38; 40) mit einem gestuften Bereich (26a; 27a) an einem Seitenrand der Ladeführung (26; 27) in Eingriff steht, um eine den gestuften Bereich (26a; 27a) umfassende Rippe zwischen der Klaue (38a; 40a) und einem Hauptkörperteil des beweglichen Trägers (20; 23) aufzunehmen.

2. Antriebsvorrichtung für einen Ladestift nach Anspruch 1, dadurch **gekennzeichnet,** daß der gestufte Bereich (26a; 27a) entlang einem äußeren seitlichen Umfangsrand der Ladeführung (26; 27) vorgesehen ist.

3. Antriebsvorrichtung für einen Ladestift nach Anspruch 1 oder 2, dadurch **gekennzeichnet,** daß der Eingriffsbereich (38; 40) des beweglichen Trägers (20; 23) lediglich einen Haltebereich (38; 40) an einem Hinterende des beweglichen Trägers (20; 23) umfaßt.

4. Antriebsvorrichtung für einen Ladestift nach einem der vorhergehenden Ansprüche, dadurch **gekennzeichnet,** daß der Eingriffsbereich (38; 40) zwei Klauen (38a; 40a) zum Eingriff mit dem gestuften Bereich (26a; 27a) hat.

5. Antriebsvorrichtung für einen Ladestift nach einem der vorhergehenden Ansprüche, dadurch **gekennzeichnet,** daß der bewegliche Träger (23) an der Aufnahmeseite ist.

6. Antriebsvorrichtung für einen Ladestift nach einem der vorhergehenden Ansprüche, dadurch **gekennzeichnet,** daß die in dem beweglichen Träger (23) vorgesehene Öffnung (23a), durch die die Antriebswelle (39) eingesetzt wird, einen die Öffnung (23a) umgebenden Vorsprung (23) hat, um die Tiefe der Öffnung zu vergrößern.

## Revendications

1. Dispositif d'entraînement pour un galet de chargement destiné à dérouler une bande magnétique d'une cassette de bande et à enrouler ladite bande autour d'un cylindre à tête rotative ayant une tête rotative intégrée là-dedans, comportant : un support mobile (20; 23) avec un galet de chargement (21; 24) pour dérouler la bande (30), ledit galet de chargement (21; 24) surmontant le support mobile (20; 23) et s'étendant vers le haut; un guide de chargement sensiblement en forme d'arc (26; 27) pour guider ledit support mobile (20; 23) au long de la circonférence dudit cylindre à tête rotative (28) entre une position initiale à partir de laquelle la bande est déroulée et une position d'extrémité dans laquelle la bande (30) est complétement déroulée, le guide de chargement (26; 27) étant disposé à une plus grande hauteur dans l'une desdites positions que dans l'autre desdites positions; une couronne d'entraînement (35; 36) comportant un arbre d'entraînement (37; 39) pour transmettre la force d'entraînement d'une source d'entraînement vers ledit support mobile (20; 23), ledit arbre d'entraînement (37; 39) étant monté sur ladite couronne d'entraînement (35; 36) et s'étendant vers le haut et étant inséré dans un orifice (20a; 23a) dudit support mobile (20; 23), caractérisé en ce que l'arbre d'entraînement (37; 39) est inséré dans l'orifice (20a; 23a) dudit support mobile tel que le support mobile (20; 23) se déplace verticalement sur ledit arbre d'entraînement (37; 39) au fur et à mesure que ladite couronne d'entraînement (35; 36) tourne, de manière à faire déplacer ledit support mobile (20; 23) entre ladite position initiale et ladite position d'extrémité, et le support mobile (20; 23) comprend une partie d'engagement (38; 40) ayant un chien (38a; 40a), la partie d'engagement (38; 40) s'engage avec une partie déportée (26a; 27a) à un bord latéral dudit guide de chargement (26; 27) pour recevoir une nervure comprenant ladite partie déportée (26a; 27a) entre ledit chien (38a; 40a) et une partie du corps principal du support mobile (20; 23).

2. Dispositif d'entraînement pour un galet de chargement tel que revendiqué dans la revendication 1, caractérisé en ce que la partie déportée (26a; 27a) est disposée au long d'un bord externe latéral à la péripherie du guide de chargement (26; 27).

3. Dispositif d'entraînement pour un galet de chargement tel que revendiqué dans la revendication 1 ou la revendication 2, caractérisé en ce que la partie d'engagement (38; 40) du support mobile (20; 23) comporte une partie de fixation (38; 40) à un bout arrière seulement du support mobile (20; 23).

4. Dispositif d'entraînement pour un galet de chargement tel que revendiqué dans n'importe laquelle des revendications précédentes, caractérisé en ce que la partie d'engagement (38; 40) comporte une paire de chiens (38a; 40a) destinés à s'engager avec la partie déportée (26a; 27a).

5. Dispositif d'entraînement pour un galet de chargement tel que revendiqué dans n'importe laquelle des revendications précédentes, caractérisé en ce que le support mobile (23) est un support mobile (23) du côté récepteur.

6. Dispositif d'entraînement pour un galet de chargement tel que revendiqué dans n'importe laquelle des revendications précédentes, caractérisé en ce que ledit orifice (23a) ménagé dans ledit support mobile (23) dans lequel ledit arbre d'entraînement (39) est inséré comporte une partie en saillie (23a) autour dudit orifice (23a) de manière à augmenter la hauteur dudit orifice.
